# EUROPEAN PATENT APPLICATION

(11) **EP 0 638 773 A1**
(43) Date of publication of application: **15.02.1995**
(21) Application number: 93112809.4
(22) Date of filing: 10.08.1993
(51) Int. Cl.: F24F 3/14, F24F 3/16

(54) **Air cleaning method, cleaning apparatus, and mist generator**

(71) Applicant: SCAT EQUIPMENT PTE LTD., Singapore 1233 (SG)
(72) Inventor: Hoon, Cheong Kong, Singapore 1542 (SG)
(74) Representative: Winkler, Andreas, Dr.

(57) **Abstract**

An air cleaning apparatus includes a housing (100) having an air inlet (110) and an air outlet (120), and a mist generator (150) arranged in the housing for generating minute particles of water. The minute water particles are mixed with air by a blower (140) in the housing and the resulting mixture is fed into a space outside the housing through the air outlet (120). Floating contaminant particles in the outside space is expanded by combining the floating contaminant particles with the minute water particles fed by the blower, and the expanded floating contaminant particles are sucked into the housing through the air inlet by the blower and are seized by a filter (130) provided at the air inlet.

## Description

### Background of the Invention

### 1. Field of the Invention

The present invention relates to an air cleaning method and a cleaning apparatus for cleaning air by seizing minute particles, such as dust, floating in the air, and a mist generator used in the cleaning apparatus.

### 2. Description of the Related Art

Exhaust gas, smoke, sulfurous or carbonic acid gas, dust, ticks, pollen, and various other dust and germs are floating in the air, resulting in air pollution. A clean aerial environment is required in various fields, including electronic, medical, and food industries, and it is created by using clean rooms and the like.

According to a conventional method for cleaning air in a clean room, floating particles in the air are seized by means of a blower and a filter. In this method, the air in the clean room is circulated by means of the blower, the filter is arranged in the middle of the path of circulation of the air so that floating contaminant particles in the air are seized by the filter as the air passes through the filter, and the filtered air is supplied to the clean room.

The cleaning efficiency of this filtering method can be increased by making the filter mesh finer. If this is done, however, the flow resistance against the air becomes higher, so that the pressure loss increases. It is necessary, therefore, to use a high-pressure blower with an unreasonably large capacity or to increase the frequency of air circulation. Usually, the filtering performance of a filter is evaluated in terms of the efficiency of seizing minute particles of 0.3 µ m or less. In order to increase this efficiency to 99% or more, however, a filter of very fine mesh is required. In this case, the pressure loss is so high that a high-pressure blower should be used with the filter, thus entailing higher equipment cost.

If a commercially available air cleaning apparatus is used in order to cut the equipment cost, the filtering performance of its filter is too low to seize minute particles of 0.3 µ m or less with ease. Moreover, it takes a very long time to obtain a predetermined cleanness after the operation of the cleaning apparatus is started.

### Summary of the Invention

The present invention has been contrived in consideration of these circumstances, and its object is to provide an air cleaning method and a cleaning apparatus, in which minute particles can be effectively seized with use of a filter of conventional performance in a short period of time, and a mist generator used in the cleaning apparatus.

In order to achieve the above object, an air cleaning method according to the present invention comprises the steps of: generating minute particles of water; expanding floating contaminant particles in air by combining the minute cater particles with floating contaminant particles; and seizing the expanded floating particles by means of a filter.

Further, an air cleaning apparatus according to the invention comprises: a housing having an air inlet and an air outlet; a mist generator in the housing for generating minute particles of water; air delivery means for mixing the minute water particles, generated by means of the mist generator, with air, feeding the resulting mixture into a space outside the housing through the air outlet so as to expand floating particles by combining floating contaminant particles in the outside space with the minute water particles, and sucking the expanded particles into the housing through the air inlet; and a filter provided at the air inlet, for seizing the floating particles in air passing through the air inlet.

According to the air cleaning method and the air cleaning apparatus of the invention arranged in this manner, the minute water particles are combined with the minute floating contaminant particles in the air, whereby floating particles of 0.3 µ m or less are expanded into large particles of more than 0.3 µ m. These large particles can be easily seized or filtered off by means of the filter.

Thus, the floating particles can be effectively seized without using any special fine-mesh filter, and the air can be cleaned to a predetermined degree in a short period of time. Further, a high-pressure blower need not be used, so that the equipment cost cannot be too high.

A mist generating apparatus according to the invention comprises: a pair of rotating members opposed and connected to each other across a predetermined gap for integral rotation; a water reservoir containing water; a suction pipe having one end connected to the rotation center portion of one of the rotating members and opening into the gap and the other end immersed in the water in the water reservoir; and drive means for rotating the rotating members to generate a negative pressure in the gap between the rotating members by means of a centrifugal force, guiding the water from the water reservoir into the gap through the suction pipe by means of the negative pressure, and scattering and pulverizing the water in the gap by means of the centrifugal force of the rotating members.

According to the mist generating apparatus constructed in this manner, the negative pressure is generated in the gap between the paired rotating members by means of the centrifugal force as the rotating members rotate, and the water in the water reservoir is sucked up through the suction pipe into the gap by means of the negative pressure. Thus, sucking up the water does not require use of any independent pump, so that the number of components of the apparatus and power consumption can be reduced, and the whole apparatus can be manufactured at low cost.

Since the water in the gap between the paired rotating members is scattered by means of the centrifugal force so that it is fragmented and pulverized in the air, negative ions are generated in the air nearby, and the pulverized water bears a positive electric charge equivalent to the negative ions. This phenomenon is referred to as the Lenard's effect or waterfall effect, since plenty of negative ions exist in air near a waterfall. According to reports on many clinical cases, air with a high negative ion density is an efficacious mitigator against some chronic diseases or syndromes, such as a feeling of fatigue or languor, stiffness in the shoulders, asthenopia, stress, headache, asthma, rheumatism, neuralgia, skin diseases, heart diseases, etc. Thus, the aforesaid minute water particles can seize contaminants in the air and moderately moisten the air, thereby improving our living environment.

### Brief Description of the Drawings

Figs. 1 to 4 show an air cleaning apparatus according to an embodiment of the present invention, in which:
Fig. 1 is a sectional view illustrating an outline of the apparatus,
Fig. 2 is a sectional view taken along line A-A of Fig. 1,
Fig. 3 is an exploded sectional view of a mist generator of the apparatus, and
Fig. 4 is a graph for comparison between the air cleaning apparatus according to the embodiment of the invention and a conventional air cleaning apparatus, with respect to their capability of seizing floating particles in the air; and
Fig. 5 is a sectional view schematically showing an air cleaning apparatus according to another embodiment of the invention.

### Detailed Description of the Preferred Embodiments

An air cleaning apparatus according to an embodiment of the present invention, along with an air cleaning method, will be described with reference to the accompanying drawings.

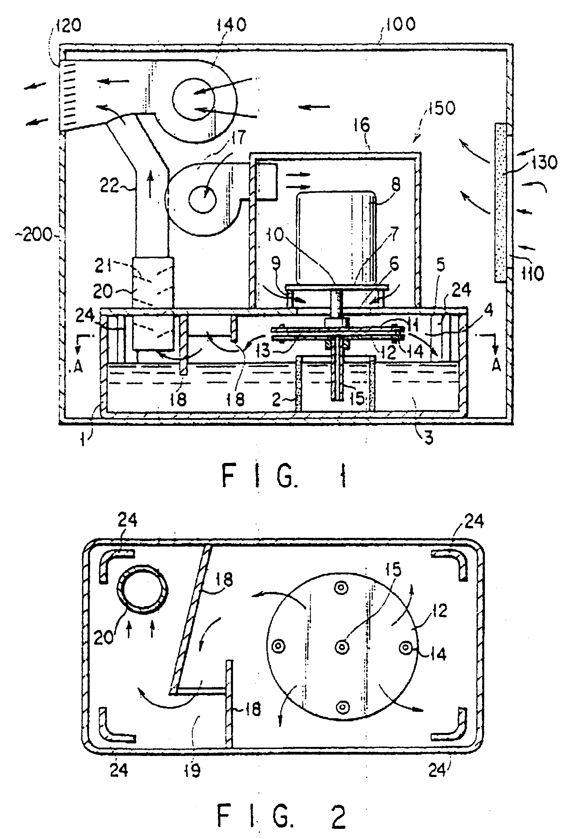

As shown in Fig. 1, the air cleaning apparatus comprises a housing 100 in the form of a substantially rectangular box. An air inlet 110 is formed in one side wall of the housing 100, and an air outlet 120 is formed in the upper portion of the other or opposite side wall of the housing. The inlet 110 is provided with a filter 130 for seizing floating contaminant particles in the air. A blower 140 for use as air delivery means is arranged in the housing 100, and attached to the outlet 120. The blower 140 blows out air from the housing 100 into the space outside the housing, e.g., a clean room 200, and sucks the air from the clean room into the housing through the air inlet 110 and the filter 130.

The cleaning apparatus is provided with a mist generator 150 which, arranged in the housing 100, generates a fine mist. In the present embodiment, the generator 150 used is an apparatus which pulverizes water by blowing it off by means of the centrifugal force of rotating disks. The following is a detailed description of the construction of the mist generator 150.

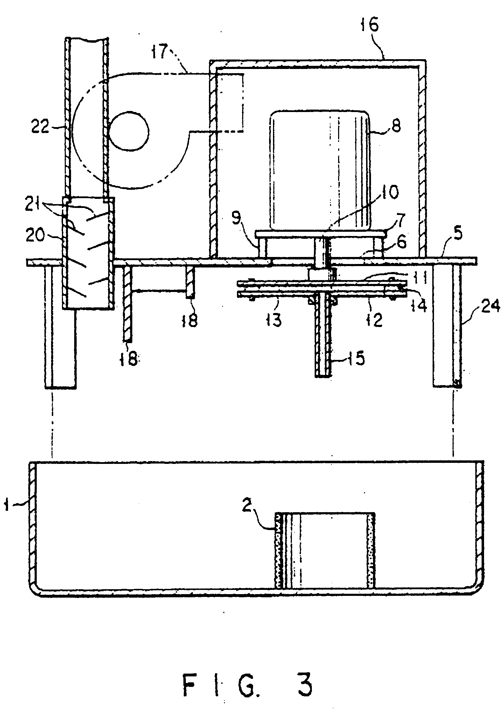

As shown in Figs. 1 to 3, the mist generator 150 comprises a water tank 1 which is set in the housing 100. The tank 1 is in the form of an open-topped box measuring, for example, 300 mm by 200 mm and 90 mm in height. The tank 1 contains a predetermined quantity, e.g., about 2 lit., of water 3. Also, a cylindrical water filter 2 disposed in the water tank 1. The lower end of the filter 2 is removably attached to the base of the tank to be closed thereby, while the upper end, which is open, is situated above the water surface.

A baseplate 5, which doubles as a lid, is removably attached to the top opening portion of the water tank 1. A mist chamber 4 is defined between the baseplate 5 and the water surface in the tank 1. The baseplate 5 has a circular opening 6, and is fitted with a table 7 over the opening 6. Motor 8 for use as drive means is mounted on the table 7. A gap 9 is secured between the table 7 and the baseplate 5, and air flows into the water tank 1 through the gap 9 and the opening 6.

A motor shaft 10 of the motor 8, which is fixed to the table 7, extends through the opening 6 into the water tank 1. A pair of rotating plates 11 and 12, for use as rotating members, are connected to the lower end or the shaft 10. These places 11 and 12 are each formed of a disk with an outside diameter of, e.g., about 140 mm, and a minute gap 13 of about 0.5 to 1.5 mm is defined between them. More specifically, the upper rotating plate 11 has its central portion connected to the lower end of the motor shaft 10, and extends at right angles to the shaft 10. The lower rotating plate 12 is arranged coaxial with the rotating plate 11 with the minute gap 13 between the two plates. The respective peripheral edge portions of the rotating plates 11 and 12 are screwed to each other with a plurality of spacers between them. Thus, the plates 11 and 12 are situated in the mist chamber 4 so that they can be integrally rotated by means of the motor 8. The rotating speed of the plates 11 and 12 is about 3,000 rpm, for example.

An opening is formed in the vicinity of the center of rotation of the lower rotating plate 12. The upper end of a suction pipe 15, having an inner diameter of, e.g., about 2 to 5 mm, is fitted to this opening. The lower end portion of the pipe 15 extends close to the base of the water tank 1, and is immersed in the water 3 within a region surrounded by the water filter 2.

The opening 6 and the motor 8 are covered by a motor cover 16 which is mounted on the baseplate 5. A suction fan 17, which is attached to the cover 16, compulsorily introduces the air from the housing 100 into the space inside the cover 16. The air inside the motor cover 16 is guided into the mist chamber 4 in the water tank 1 through the gap 9, defined between the table 7 and the baseplate 5, and the opening 6.

A plurality of guide plates 18 are attached to those portions of the lower surface of the baseplate 5 which are situated apart from the rotating plates 11 and 12. The plates 18 define in the mist chamber 4 a passage 19 through which the air flows meandering.

An air-water separator tube 20 is attached to an end portion of the baseplate 5 so as to extend at right angles to the baseplate. The tube 20 has a cylindrical body and a plurality of baffle plates 21 in the body. The lower end of the tube 20 opens into the mist chamber, and a mist supply duct 22 is connected to the upper end of the tube 20. The upper end of the duct 22 is connected to the delivery side of the blower 140 in the housing 100. The blower 140 sucks in the air in the housing 100, mixes the sucked air with the fine mist fed through the duct 22, and blows out the resulting mist-air mixture through the air outlet 120 into the clean room 200.

Support legs 24 is fixed individually to the corner portions of the lower surface of the baseplate 5. These legs downwardly extend longer than the suction pipe 15 and the guide plates 18. Thus, when the baseplate 5 is removed from the water tank 1 and placed on some flat bearing surface, the legs 24 support the baseplate 5 lest the lower ends of the pipe 15 and the plates 18 be in contact with the bearing surface.

The following is a description of the operation of the air cleaning apparatus, constructed in this manner, along with the air cleaning method.

When a power switch (not shown) is turned on, the blower 140, suction fan 17, and motor 8 are activated.

The blower 140 sucks in and pressurizes the air in the housing 100, and discharges the compressed air through the air outlet 120 into the clean room 200. As a result, the air pressure in the housing 100 lowers, so that the outside air is sucked through the air inlet 110 into the housing 100. The air from the clean room 200 passes through the filter 130 as it flows through the inlet 110 into the housing 100. Thereupon, dust or other floating contaminant particles in the air are seized by the filter 130, so that purified or filtered air is introduced into the housing 100. The purified air is discharged through the air outlet 120 into the clean room 200 by means of the blower 140. Thus, the air in the room 200 is filtered and cleared of the contaminant particles as it is circulated through the air cleaning apparatus.

When the suction fan 17 is operated in the housing 100, the air in the housing is introduced into the space inside the motor cover 16, and is fed into the mist chamber 4 through the gap 9, between the table 7 and the baseplate 5, and the opening 6. The air from the chamber 4 passes through the meandering passage 19 between the guide plates 18, and is discharged from the air outlet 120 to the outside through the air-water separator tube 20, supply duct 22, and blower 140.

As the air current is thus formed by means of the blower 140 and the suction fan 17, the rotating plates 11 and 12 and the suction pipe 15 are integrally rotated by means of the motor 8. As the plates 11 and 12 rotate in this manner, a centrifugal force is generated in the air in the minute gap 13 between the plates 11 and 12. This centrifugal force produces a negative pressure in the central portion of the gap 13, so that the pressure in the suction pipe 15 becomes also negative. Accordingly, the water 3 in the water tank 1 is sucked up through the pipe 15 into the gap 13. This is done after the water is passed through the filter 2.

The water, introduced into the gap 13, is scattered around the rotating plates 11 and 12 by the centrifugal force of the plates 11 and 12. By this scattering, the water is fragmented and pulverized into minute splashes. As the water in reduced into minute waterdrops in this manner, a mist with a very small particle diameter of, e.g., 0.3 µ m is produced. Thus, a fine mist is produced in the mist chamber 4 in the water tank 1, and it is mixed with the air introduced through the opening 6 of the baseplate 5.

In this case, large waterdrops, which are also produced without being pulverized, fall into the water tank 1 by the force of gravity As the water is fragmented and pulverized in the air, negative ions are generated in the air nearby, that is, the air is negatively ionized by the so-called Lenard's effect. Thus, plenty of negative ions develop in the mist chamber 4.

The resulting mixture of the negatively ionized air and the fine mist flows along the air current in the mist chamber 4, through the meandering passage 19 between the guide plates 18. In doing this, the mixture runs against the inner surfaces of the water tank 1 and the baseplate 5 or the guide plates 18, or receives resistance between the wall surfaces. As a result, a large-particle mist with relatively high kinetic energy, contained in the mixture, adheres to the surfaces of the baseplate 5 and the guide plates 18, flows downward along these wall surfaces, and falls into the water tank 1. Further, the mixture of the mist and the air passes through the air-water separator tube 20. In doing this, the mixture runs against the baffle plates 21, so that smaller waterdrops adhere to the plates 21. Thus, only the mist with a very small particle size, along with the air, is delivered into the blower 140 through the supply duct 22.

The fine mist is further mixed with the air sucked into the blower 140, and the resulting mixture is discharged into the clean room 200 through the air outlet 120. In the clean room 200, the floating contaminant particles in the air, such as dust, sooty smoke, various gases, germs, etc., combine with the supplied fine mist, thereby expanding and increasing their diameter. These large floating contaminant particles are seized by the filter 130 as they are introduced into the housing 100 through the air inlet 110 thereof.

The humidity of the air blown off from the air outlet 120 ranges from about 75 to 85%, and 60,000 to 200,000 negative ions can be measured in each cubic centimeter of the air. The water consumption, which varies depending on the room temperature, ranges from 50 to 100 cc/hr. If the quantity of water contained in the water tank 1 is 2 lit., therefore, 10 hours of continuous operation can be enjoyed on condition that the water is consumed to half its volume.

According to the cleaning method and apparatus arranged in this manner, even minute floating contaminant particles which cannot be seized under normal conditions can be seized by using the conventional filter 130, since the particles expand as they are combined with the mist.

It is unnecessary, therefore, to use a filter with specially minute meshes or a large-capacity blower. Also, the cleanness in the clean room can be improved in a short period of time, so that a clean aerial environment can be created quickly.

In order to verify the cleaning effect of the air cleaning apparatus constructed in this manner, the inventors hereof conducted the following test.

Used as the filter 130 in this cleaning apparatus was an HEPA filter which is adapted for use in an air cleaning apparatus from Mitsubishi Heavy Industries, Ltd. The nominal capturing efficiency of this filter for 0.3-µ m particles is 64%. The number of floating particles in the clean room 200 was measured for each of cases A and B with the blast feed rate of the blower 140 adjusted to 3.0 m³/min. In case A (present invention), the mist generator 150 in the housing 100 was operated simultaneously with the blower 140. In case B, the generator 150 was not operated. The blast feed rate of the suction fan 17 of the mist generator 150 was adjusted to 0.5 m³/min. The clean room 200 used was a Japanese six-mat room with the capacity of 24 m³. After two cigarettes were smoked in this room, the number of floating particles remaining in the room was measured with the passage of time.

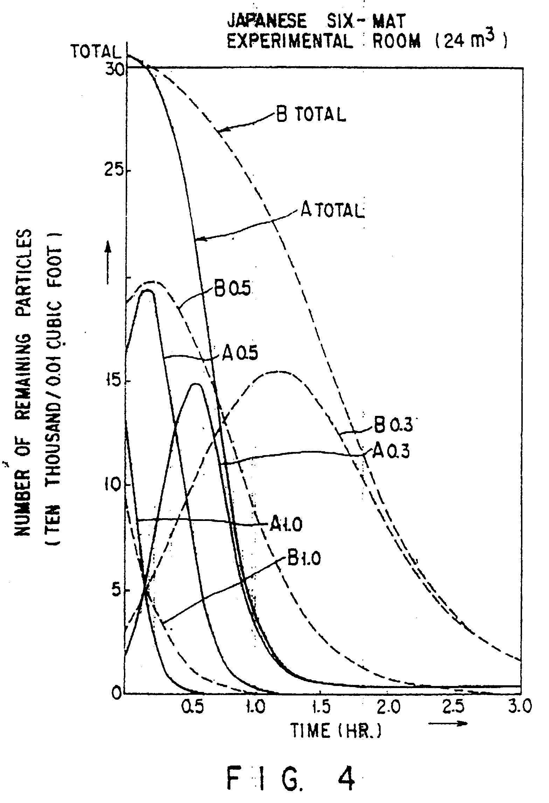

Fig. 4 shows the measurement results. In Fig. 4, characteristic curves A_{TOTAL} and B_{TOTAL} represent the total numbers of remaining floating particles, individually. When the blower 140 and the mist generator 150 were simultaneously operated to seize the floating particles by means of the filter 130, the quantity of the remaining floating particles in the air was able to be reduced to 20,000 particles or less per 0.01 cubic foot within one hour, as represented by characteristic curve A_{TOTAL}. Thus, it was confirmed that a high cleanness can be obtained in a short period of time.

In case B, in contrast with this, the floating particles are seized by means of the filter 130 by operating only the blower 140 without operating the mist generator 150. In order to restrict the number of the remaining floating particles to 50,000 particles or less per 0.01 cubic foot, as represented by characteristic curve B_{TOTAL}, in this case, about 2.5 hours of continuous operation is required, thus indicating a low cleaning capacity.

In Fig. 4, moreover, characteristic curves A_{1.0} and B_{1.0} individually represent the results of measurement on the number of relatively large floating particles with the diameter of 1.0 µ m or more remaining in the air. It was indicated that there is no substantial difference in the number of the remaining floating particles between the characteristic curve A_{1.0} for case A and the characteristic curve B_{1.0} for case B. It is believed that this is because the particles are so large that the filtering function of the filter 130 is subject to non special variation.

In Fig. 4, on the other hand, characteristic curves A_{0.5} and B_{0.5} individually represent the results of measurement on the number of particles with the diameter of 0.5 µ m remaining in the air. It can be seen that the quantity of the remaining floating particles is reduced in a shorter period of time in case A (represented by characteristic curve A_{0.5}) than in case B (represented by characteristic curve B_{0.5}).

In Fig. 4, moreover, characteristic curves A_{0.3} and B_{0.3} individually represent the results of measurement on the number of particles with the diameter of 0.3 µ m remaining in the air. It can be seen that the quantity of the remaining floating particles is reduced in a much shorter period of time in case A (represented by characteristic curve A_{0.3}) than in case B (represented by characteristic curve B_{0.3}).

It was ascertained from these test results that the smaller the particles of the contaminants floating in the air, the more effective the function of the air cleaning apparatus of the present embodiment is. This is probably because the fine mist discharged into the air is combined with the floating contaminant particles in the air, thereby increasing the particle size, so that the floating particles can be easily seized by means of the filter 130.

In Fig. 4, characteristic curves A_{0.5}, B_{0.5}, A_{0.3} and B_{0.3} rise for several minutes after the start of the operation of the apparatus, indicating a temporarily increase of the particle number. This is attributable to the existence of those particles which are caused to drift away from the floor, ceiling, or side walls of the room by the air current. Characteristic curves A_{0.5} and A_{0.3} assume the temporary sudden rise also because the discharged fine mist is measured as particles.

It can be understood from these test results that the cleaning method and apparatus according to the present embodiment can provide a large air cleaning capacity, and create a highly clean aerial environment in a short period of time.

As the water is fragmented and pulverized in the air by means of the centrifugal force of the rotating plates 11 and 12, negative ions are generated in the air nearby, that is, the air is negatively ionized. Thus, plenty of negative ions develop in the mist chamber 4 of the water tank 1. The negatively ionized air, along with the fine mist, is supplied to the clean room 200 by means of the blower 140, whereupon it neutralizes static electricity. As a result, the minute particles, adhering to the walls and the like of the room by electrostatic force, are released and floats freely in the air, so that they become liable to combine with the fine mist. Thus, the efficiency of seizing the minute particles in the room is further increased, so that the cleaning effect is improved.

Since the mist generator 150 sucks up the water from the water tank 1 through the suction pipe 15 by the agency of the centrifugal force of the paired rotating plates 11 and 12, it does not require use of any special pump for supplying water between the plates 11 and 12. Accordingly, the apparatus can enjoy a simple construction, and entails less power consumption.

Preferably, the size of the minute water particles produced in the mist generator 150 should be 0.3 µ m or less. Although conventional filters have a good capacity to seize particles of more than 0.3 µ m, their capability of seizing particles of 0.3 µ m or less is poor. Thus, these filters allow floating particles of 0.3 µ m or less to remain in the air with high probability. In combining these small floating particles with the mist, the waterdrops which constitute the mist can easily unite with the minute floating particles of substantially equal sizes. Preferably, therefore, the size of the waterdrops should be approximated to that of the floating particles, i.e., 0.3 µ m or less.

In these circumstances, it is observed that the mist generator 150 of the embodiment described above generates a mist with the average particle diameter of 0.28 µ m, under conditions including the diameter of 140 mm for the rotating plates 11 and 12, the width of 1.5 mm for the gap 13 between the plates 11 and 12, and the rotating speed of 2,900 rpm for the plates 11 and 12. The number of minute particles of 0.1 to 0.5 µ m is not less than a million per 0.01 cubic foot, and the number of minute particles of 0.3 µ m is supposed to be a considerable one.

The motor 8, motor cover 16, suction fan 17, air-water separator tube 20, and supply duct 22 are intensively arranged on the baseplate 5, which closes the top opening portion of the water tank 1, and the tank 1 is removably attached to the baseplate 5. Accordingly, the tank 1, which is susceptible to soiling, can be easily cleaned after being removed. Thus, the water tank 1 can be kept clean. If the tank capacity is made relatively small, moreover, the frequency of water supply or replacement increases, so that the clean state can be maintained more efficiently.

The filter 2 in the water tank 1 filters off dust in the water. If the water swirls in the tank 1, it sometimes cannot be sucked up through the suction pipe 15. Since the lower end of the pipe 2 is isolated from the swirl by the filter 2, however, the water in the tank 1 can be smoothly sucked up through the pipe 15.

It is to be understood that the present invention is not limited to the embodiment described above, and that various changes and modifications may be effected therein by one skilled in the art without departing from the scope or spirit of the invention.

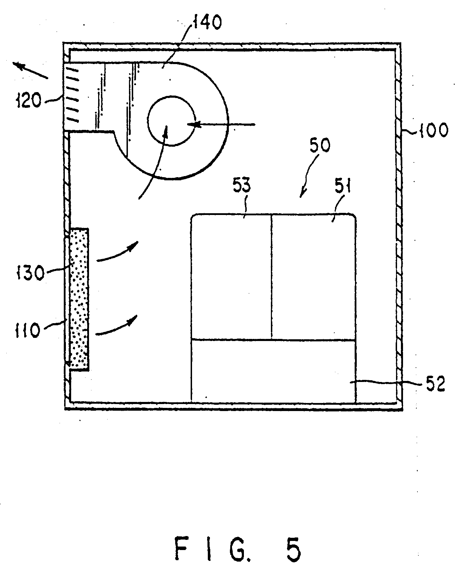

For example, the mist generator 150 is not limited to the type in which the water is pulverized by utilizing the centrifugal force of the rotation of the paired rotating plates 11 and 12, and a humidifier 50, such as the one shown in Fig. 5, may be used instead. A detailed description of the humidifier 50 is omitted, since a commercially available one may be used for the purpose. The humidifier may be of a heater type or an ultrasonic type. In this case, water in a cartridge tank 51 is atomized by means of a mist generating unit 52, and discharged through an outlet port 53.

The same effect of the foregoing embodiment can be obtained with use of the mist generator constructed in this manner.

As described above, moreover, the size of the waterdrops in the mist discharged into the clean room 200 should preferably be restricted to 0.3 µ m or less. If the mist generated by means of the mist generator 150 or 50 contains large waterdrops of more than 0.3 &Lm, however, it is apprehended that the inside of the room 200 may be humid. In order to prevent this, a mist filter for seizing relatively large waterdrops may be attached to the air outlet 120 of the housing 100.

## Claims

1. A method of cleaning air comprising the steps of:
generating minute particles of water;
expanding floating contaminant particles in air by combining the minute water particles with the floating contaminant particles, and
seizing the expanded floating particles by means of a filter.

2. A method according to claim 1, wherein said step of generating the minute water particles includes scattering and pulverizing the water by means of a rotating member.

3. An air cleaning apparatus comprising:
a housing having an air inlet and an air outlet;
a mist generator arranged in the housing for generating minute particles of water;
air delivery means for mixing the minute water particles with air, feeding the resulting mixture into a space outside the housing through the air outlet, expanding floating contaminant particles in the outside space by combining the floating contaminant particles with the minute water particles, and sucking the expanded floating contaminant particles into the housing through the air inlet; and
a filter provided at the air inlet, for seizing the floating contaminant particles in air passing through the air inlet.

4. A cleaning apparatus according to claim 3, wherein said minute water particles generated by means of the mist generator have an average size of 0.3 µ m or less.

5. A cleaning apparatus according to claim 3, wherein said mist generator includes a pair of rotating members opposed and connected to each other across a predetermined gap for integral rotation, a water reservoir containing water, a suction pipe having one end connected to the rotational center portion of one of the rotating members and opening into the gap and the other end immersed in the water in the water reservoir, and drive means for rotating the rotating members to generate a negative pressure in the gap between the rotating members by means of a centrifugal force, introducing the water from the water reservoir into the gap through the suction pipe by means of the negative pressure, and scattering and pulverizing the water in the gap by means of the centrifugal force of the rotating members.

6. A cleaning apparatus according to claim 5, wherein said water reservoir includes a water tank having an opened top and containing the water, and a baseplate removably attached to the water tank and closing a opened top thereof, and said rotating members and drive means are supported by the baseplate.

7. A cleaning apparatus according to claim 6, wherein said water reservoir includes a mist chamber defined between the surface of the water in the water tank and the baseplate, and said rotating members are arranged in the mist chamber.

8. A cleaning apparatus according to claim 7, wherein said baseplate has a through hole, said drive means includes a motor mounted on the baseplate so as to face the through hole and having a driving shaft extending through the through hole into the mist chamber, and said rotating members are connected to the driving shaft.

9. A cleaning apparatus according to claim 8, wherein said rotating members include a disk-shaped first rotating plate coaxially fixed to an extending end of the driving shaft and a disk-shaped second rotating plate opposed and coaxially attached to the first rotating plate at a predetermined distance therefrom.

10. A cleaning apparatus according to claim 9, wherein said suction pipe is fixed to the second rotating plate and extends coaxially with the driving shaft.

11. A cleaning apparatus according to claim 10, wherein said mist generator includes an air-water separator mounted on the baseplate, the separator having one end communicating with the mist chamber and the other end communicating with the air delivery means by means of a supply duct.

12. A cleaning apparatus according to claim 11, wherein said mist generator includes a guide plate arranged between the rotating members and the air-water separator in the mist chamber, the guide plate defining a meandering passage for guiding air and the minute water particles from the rotating members toward the air-water separator.

13. A cleaning apparatus according to claim 12, wherein said mist generator includes a fan for guiding the air from the housing into the mist chamber through the through hole of the baseplate and delivering the air to the air delivery means via the passage, the air-water separator, and the supply duct.

14. A cleaning apparatus according to claim 6, wherein said mist generator includes a cylindrical water filter having one end fixed to a bottom of the water tank and the other end opening above the water surface, the water filter surrounding the suction pipe.

15. A mist generating apparatus comprising:
a pair of rotating members opposed and connected to each other across a predetermined gap for integral rotation;
a water reservoir containing water;
a suction pipe having one end connected to the rotational center portion of one of the rotating members and opening into the gap and the other end immersed in the water in the water reservoir; and
drive means for rotating the rotating members to generate a negative pressure in the gap between the rotating members by means of a centrifugal force, introducing the water from the water reservoir into the gap through the suction pipe by means of the negative pressure, and scattering and pulverizing the water in the gap by means of the centrifugal force of the rotating members.

16. A mist generating apparatus according to claim 15, wherein said water reservoir includes a water tank containing the water and having an opened top and a baseplate removably attached to the water tank and closing the opened top thereof, and said rotating members and drive means are supported by means of the baseplate.

17. A mist generating apparatus according to claim 16, wherein said water reservoir includes a mist chamber defined between the surface of the water in the water tank and the baseplate, and said rotating members are arranged in the mist chamber.

18. A mist generating apparatus according to claim 17, wherein said baseplate has a through hole, said drive means includes a motor mounted on the baseplate so as to face the through hole and having a driving shaft extending through the through hole into the mist chamber, and said rotating members are supported by means of the driving shaft.

19. A mist generating apparatus according to claim 18, wherein said rotating members include a disk-shaped first rotating plate coaxially fixed to an extending end of the driving shaft and a disk-shaped second rotating plate opposed and coaxially attached to the first rotating plate at a predetermined distance therefrom.
